# EUROPÄISCHE PATENTSCHRIFT

(11) **EP 0 777 831 B1**
(45) Veröffentlichungstag und Bekanntmachung des Hinweises auf die Patenterteilung: **17.06.1998**
(21) Anmeldenummer: 95934061.3
(22) Anmeldetag: 17.08.1995
(51) Int. Cl.: F16D 66/02, F16D 55/22

(54) **SCHWIMMSATTEL FÜR SCHEIBENBREMSE**
FLOATING CALIPER FOR A DISK BRAKE
ETRIER FLOTTANT POUR FREIN A DISQUE

(30) Priorität: 06.09.1994 DE 4431725
(43) Veröffentlichungstag der Anmeldung: 11.06.1997
(73) Patentinhaber: ITT Automotive Europe GmbH, 60488 Frankfurt am Main (DE); Kirschner, Thomas, 60596 Frankfurt am Main (DE); Bernhard, Klaus, 65239 Hochheim (DE); Gerhardt, Winfried, 60489 Frankfurt am Main (DE)
(72) Erfinder: KIRSCHNER, Thomas, D-60596 Frankfurt am Main (DE); BERNHARD, Klaus, D-65239 Hochheim (DE); GERHARDT, Winfried, D-60489 Frankfurt am Main (DE)
(74) Vertreter: Grau, Ulf
(86) Internationale Anmeldenummer: EP9503264
(87) Internationale Veröffentlichungsnummer: WO9607834

(56) Entgegenhaltungen:
- EP-A- 0 602 866
- DE-A- 3 926 437
- DE-A- 4 028 553

## Beschreibung

Die Erfindung betrifft einen Schwimmsattel für eine Scheibenbremse gemäß dem Oberbegriff des Patentanspruchs 1.

Aus der DE 40 28 553 A1 ist ein Schwimmsattel mit einer elektrischen Reibbelagwarnvorrichtung bekannt, bei dem eine Steckverbindung für ein elektrisches Warnkabel am Gehäuse des Schwimmsattels festgeschraubt ist. Die bekannte Anordnung hat den Nachteil, daß die Steckverbindung axial nach innen über den Schwimmsattel weit hinausragt und daher sowohl einen größeren Einbauraum beansprucht als auch leicht beschädigt werden kann.

Aufgabe der Erfindung ist es, einen verbesserten Schwimmsattel mit Reibbelagwarnvorrichtung anzugeben, bei dem die Steckverbindung für das elektrische Warnkabel über die äußeren Konturen des Schwimmsattels im wesentlichen nicht herausragt und dennoch auf einfache und kostengünstige Weise befestigt ist.

Die Lösung der Aufgabe ergibt sich aus dem kennzeichnenden Teil des Patentanspruchs 1. Bei dem erfindungsgemäßen Schwimmsattel ist die Steckverbindung axial weiter zur Mitte hin angeordnet und schmiegt sich in eine mittlere Ausnehmung des Schwimmsattels ein, über die sie auch in radialer Richtung nicht herausragt. Für die einfache Befestigung ist nur eine einzige Befestigungsschraube vorgesehen, die in Umfangsrichtung versetzt und achsparallel angeordnet ist. Bei dieser Anordnung der Befestigungsschraube könnte sich aber die Steckverbindung verdrehen und radial innen mit der Bremsscheibe oder radial außen mit der Felge des Fahrzeugrad& in Kontakt kommen. Um ein Verdrehen der Steckverbindung zu verhindern, sind erfindungsgemäß seitlich neben der Befestigungsschraube an den Schwimmsattel angegossene Noppen vorgesehen, an denen die Steckverbindung anschlägt.

Die Erfindung schafft eine einfach zu fertigende Anordnung der Steckverbindung und ihrer Befestigung durch eine einzige Schraube. Die erforderlichen Ausnehmungen, Anlageflächen und Noppen werden ohne zusätzliche Fertigungskosten beim Gießen des Schwimmsattels angeformt. Lediglich das Gewinde für die Befestigungsschraube erfordert einen Nachbearbeitungsgang.

In einer bevorzugten Ausführungsform besitzt der Befestigungsabschnitt der Steckverbindung einen in Umfangsrichtung seitlich nach außen abstehenden Vorsprung, der als Anschlag zur Anlage an den einen Noppen des Schwimmsattels vorgesehen ist. Zwischen diesem einen Anschlag an dem einen in Umfangsrichtung weiter außen angeordneten Noppen und dem anderen Anschlag an dem anderen im Bereich der mittleren Ausnehmung angeordneten Noppen ist eine geringfügige Verdrehung der Steckverbindung um die Befestigungsschraube möglich. Wenn der maximale Drehwinkel zwischen den beiden Anschlägen kleiner als 20 Grad ist, so kann sich die Steckverbindung nicht in einen Bereich hinein verdrehen, der außerhalb der Konturen des Schwimmsattels liegt.

Ein Ausführungsbeispiel der Erfindung wird nachfolgend anhand der Zeichnungen näher erläutert.

Es zeigen:

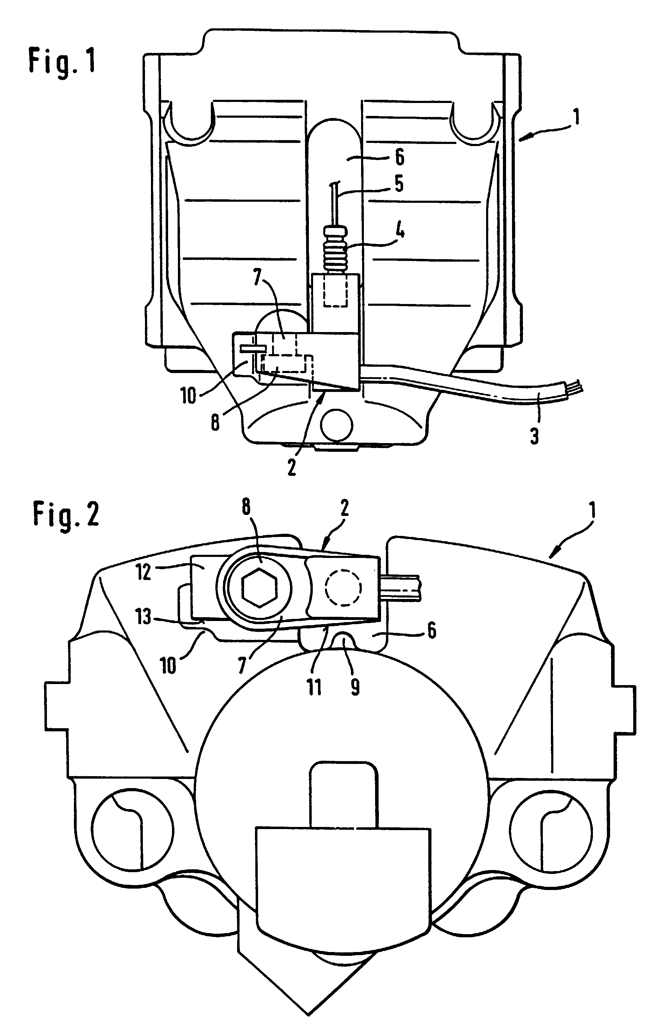

- Figur 1: eine Draufsicht auf einen erfindungsgemäßen Schwimmsattel mit Steckverbindung,
- Figur 2: eine vergrößerte Seitenansicht desselben Schwimmsattels.

Der dargestellte Schwimmsattel 1 ist für eine Scheibenbremse mit einer elektrischen Reibbelagwarnvorrichtung vorgesehen. Eine Steckverbindung 2 für ein elektrisches Warnkabel 3 ist am Schwimmsattel 1 befestigt. Das Warnkabel 3 führt zu einer nicht gezeigten Warnanzeige im Fahrzeug. Auf der anderen Seite ist mit der Steckverbindung 2 ein kleiner Stecker 4 verbunden, von dem aus wiederum ein kurzes elektrisches Kabel 5 zu einem nicht gezeigten Verschleißsensor führt, der an einem nicht gezeigten Bremsbelag befestigt ist. Die Steckverbindung 2 ist in einer mittleren Ausnehmung 6 des Schwimmsattels 1 angeordnet und besitzt einen aus der Mitte seitlich in Umfangsrichtung vorspringenden Befestigungsabschnitt 7, der mittels einer Befestigungsschraube 8 am Schwimmsattel 1 festgeschraubt ist. Aus der achsparallelen Anordnung der Befestigungsschraube 8 ergibt sich der Vorteil, daß ein in einem Nachbearbeitungsschritt in den Schwimmsattel 1 einzubringendes Gewinde einfacher und kostengünstiger gefertigt werden kann. Im Bereich der mittleren Ausnehmung 6 besitzt der Schwimmsattel 1 einen ersten angegossenen Noppen 9, der seitlich neben der Befestigungsschraube 8 angeordnet ist. Auf der anderen Seite der Befestigungsschraube 8, in Umfangsrichtung weiter außen liegend besitzt der Schwimmsattel 1 einen zweiten Noppen 10, der ebenfalls wie der erste Noppen 9 beim Gießen des Schwimmsattels 1 auf einfache Weise ohne zusätzliche Kosten mit eingeformt wird. Die Noppen 9, 10 bilden Anschläge zur Verdrehsicherung der Steckverbindung 2. Bei einer Rechtsdrehung der Steckverbindung 2 kommt eine innere Anschlagfläche 11 an den Noppen 9 in Anlage, wobei ein maximaler Drehwinkel von 7 Grad gegenüber der Normallage zulässig ist. Auf der linken Seite ist der Befestigungsabschnitt 7 der Steckverbindung 2 mit einem in Umfangsrichtung weiter nach außen abstehenden Vorsprung 12 versehen, der eine Anlagefläche 13 zur Anlage an dem anderen Noppen 10 besitzt. Bei einer Linksdrehung ist ein maximaler Winkel von 9 Grad zulässig, bis die Steckverbindung 2 aus ihrer Normallage am Noppen 10 anschlägt. Der gesamte Winkelbereich von Anschlag zu Anschlag ist in jedem Fall kleiner als 20 Grad. Der Noppen 9 verhindert dabei, daß die Steckverbindung 2 radial nach innen in Anlage an einen Bremsbelag oder eine Bremsscheibe kommt. Der andere Noppen 10 verhindert, daß die Steckverbindung 2 radial nach außen in Kontakt mit einer Radfelge des Fahrzeugs kommt.

## Patentansprüche

1. Schwimmsattel für eine Scheibenbremse mit einer elektrischen Reibbelagwarnvorrichtung, bei der eine Steckverbindung (2) für ein elektrisches Warnkabel (3) am Schwimmsattel (1) befestigt ist, dadurch **gekennzeichnet**, daß die Steckverbindung (2) im wesentlichen in einer mittleren Ausnehmung (6) des Schwimmsattels (1) angeordnet ist und einen in Umfangsrichtung seitlich aus der Mitte vorspringenden Befestigungsabschnitt (7) aufweist, der mittels einer achsparallel versetzt angeordneten Befestigungsschraube (8) mit dem Schwimmsattel (1) verschraubt ist, und daß der Schwimmsattel (1) im Bereich der mittleren Ausnehmung (6) und in Umfangsrichtung seitlich neben der Befestigungsschraube (8) mit angegossenen Noppen (9,10) versehen ist, die ein Verdrehen der Steckverbindung (2) um die Befestigungsschraube (8) auf einen unwesentlichen Winkelbereich einschränken.

2. Schwimmsattel nach Anspruch 1, **dadurch gekennzeichnet**, daß der maximale Drehwinkel der Steckverbindung (2) zwischen den von den Noppen (9,10) gebildeten Anschlägen kleiner als 20 Grad ist.

3. Schwimmsattel nach Anspruch 1 oder 2, **dadurch gekennzeichnet**, daß der Befestigungsabschnitt (7) der Steckverbindung (2) mit einem in Umfangsrichtung nach außen abstehenden Vorsprung (12) zur Anlage an dem anderen Noppen (10) versehen ist.

## Claims

1. Floating caliper for a disc brake including an electric friction lining alarm device, wherein a plug connection (2) for an electric warning cable (3) is attached to the floating caliper (1),
**characterized** in that the plug connection (2) is generally arranged in an intermediate recess (6) of the floating caliper (1) and has a fastening portion (7) which projects from the middle laterally in a circumferential direction, and is screwed to the floating caliper (1) by a paraxially offset fastening screw (8), and in that the floating caliper (1) has cast knubs (9, 10) in the area of the intermediate recess (6) and in the circumferential direction laterally beside the fastening screw (8), the knubs limiting the rotation of the plug connection (2) around the fastening screw (8) to an insignificant angular area.

2. Floating caliper as claimed in claim 1,
**characterized** in that the maximum angle of rotation of the plug connection (2) between the stops provided by the knubs (9, 10) is smaller than 20 degrees.

3. Floating caliper as claimed in claim 1 or claim 2,
**characterized** in that the fastening portion (7) of the plug connection (2) includes a projection (12) which projects outwardly in a circumferential direction to abut on the other knub (10).

## Revendications

1. Etrier flottant pour un frein à disque comportant un dispositif d'avertissement électrique à garniture de frottement dans lequel est fixé à l'étrier flottant (1) une connexion à fiches (2) pour un câble d'avertisement (3) électrique, caractérisié en ce que la connexion à fiches (2) est disposée essentiellement dans une rainure (6) centrique de l'étrier flottant (1) et comporte une section (7) de fixation faisant saillie en sens périphérique latéralement du centre, la section (7) étant vissée à l'étrier flottant (1) par l'intermédiaire d'un boulon de fixation (8) décalé en parallèle à l'axe, et en ce que l'étrier flottant (1) dans la région de la rainure centrale (6) et en sens périphérique, latéralement à côté du boulon de fixation (8), est pourvu de boutons (9,10) versés pour limiter la torsion de la connexion à fiches (2) autour du boulon de fixation (8) à une région angulaire négligable.

2. Etrier flottant selon la revendication 1, caractérisé en ce que l'angle maximum de rotation de la connexion à fiches (2) entre les arrêts formés par des boutons (9,10) est moins de 20°.

3. Etrier flottant selon les revendications 1 ou 2, caractérisé en ce que la section de fixation (7) de la connexion à fiches (2) est pourvue d'une saillie (12) ressautant vers l'extérieur en sens périphérique pour s'appuyer à l'autre bouton (10).
